# EUROPEAN PATENT SPECIFICATION

(11) **EP 1 375 204 B1**
(45) Date of publication and mention of the grant of the patent: **20.02.2008**
(21) Application number: 03076655.4
(22) Date of filing: 28.05.2003
(51) Int. Cl.: B60G 15/12, B60G 15/14, F16F 9/05, F16F 9/36, F16F 9/58

(54) **Piston rod seal for airlift damper**
Kolbenstangendichtung für Stossdämpfer mit pneumatischer Niveauregulierung
Joint d'étanchéité pour tige de piston d'un amortisseur avec régulation du niveau pneumatique

(30) Priority: 24.06.2002 US 178212
(43) Date of publication of application: 02.01.2004
(73) Proprietor: Delphi Technologies, Inc., Troy, MI 48007 (US)
(72) Inventor: Lun, Saiman, Centerville, OH 45458 (US)
(74) Representative: Denton, Michael John

(56) References cited:
- DE-A- 19 755 549
- DE-U- 20 109 501
- FR-A- 2 728 948
- US-A- 4 332 397

## Description

### TECHNICAL FIELD

This invention relates to an airlift shock damper having an inflatable air sleeve to adjust the riding height of the vehicle upon which the damper is mounted. Such a damper is known from US 4332397 A that forms the closest prior art according to the preamble of claim 1.

### BACKGROUND OF THE INVENTION

Many motor vehicles have a suspension system that includes shock absorbers to control the relative movements of the vehicle chassis with respect to the vehicle body. These shock absorbers commonly include a housing and a piston assembly. The piston assembly includes a piston and a piston rod extending from the piston. The housing is commonly connected to a vehicle wheel end assembly. The housing is filled with a damping fluid, which is metered across the piston plate to dampen relative movement between the housing and piston assembly. The piston rod includes a portion extending from the top end of the housing, which is connected to the vehicle body through a conventional top mount. A jounce bumper is secured below the top mount to absorb the force of unusually large relative movement between the chassis and body. An airlift shock absorber includes an air sleeve that may be inflated to control the relative positions of the piston assembly and housing, to thereby control the riding height of the vehicle.

An airlift shock normally contains a seal to prevent air leak between the piston rod and the upper mount. A typical seal is achieved by machining a gland into the cylinder bore mating to the rod to retain an O-ring for the seal. The machining of an internal gland is difficult and costly, as is the installation of a small O-ring into an internal gland. Another approach is to machine an external gland on the tenon of the piston rod, which may weaken the tenon. A third option is an O-ring retainer to locate the O-ring during the assembly process as the mating part is pressed into place. U.S. Patent No. 6,361,027, the disclosure of which is hereby incorporated by reference, shows a shock absorber with a flexible connection between an airlift component and the top mount. DE 197 55 549 A, DE 201 09 501 U and FR 2 728 948 A show designs of piston rod sealing arrangements.

### SUMMARY OF THE INVENTION

This invention is a top mount for a damper having a piston rod tenon. The top mount comprises a mount insert and an o-ring. The mount insert is disposed on the tenon, and the o-ring is disposed on the tenon and within a cutout of the mount insert. A damper including the top mount, and a method of assembling a top mount, are also disclosed.

Accordingly, it is an object of the present invention to provide a top mount of the type described above that requires relatively little force to assemble.

Another object of the present invention is to provide a top mount of the type described above that is inexpensive and easy to assemble.

Still another object of the present invention is to provide a damper that includes a top mount of the type described above.

These and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

**FIG. 1** is a cross-sectional view of a suspension damper according to the present invention; and
**FIG. 2** is a cross-sectional view of a piston rod, mount insert and o-ring in a preassembled position.

### DETAILED DESCRIPTION OF THE PREFERRED EMBODIMENTS

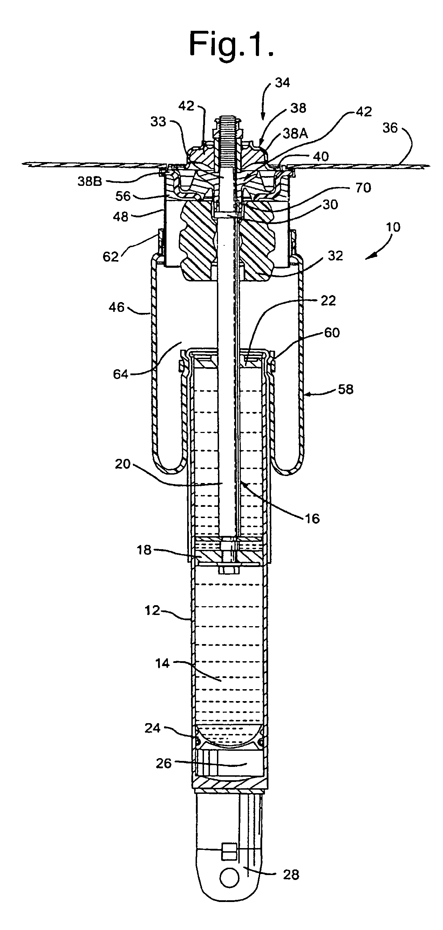

**FIG. 1** shows one embodiment of an airlift suspension damper 10 according to the present invention for a motor vehicle. The damper 10 includes a housing 12 defining a damping chamber 14. A piston assembly 16 includes a damping piston 18 and a piston rod 20 that extends from the piston 18 through an upper end 22 of the housing 12. Fluid within the chamber 14 is metered across the piston 18 in a manner well known to those skilled in the art to dampen the relative movement between the housing 12 and the piston assembly 16. A gas cup 24 is slidably mounted within the housing 12, and separates the damping chamber 14 from a compensating chamber 26. The chamber 26 is charged with gas under pressure to move the gas cup within the housing 12 and compensate for the change in volume of the damping chamber 14 in response to extension and retraction of the piston rod 20 with respect to the housing 12, and also to compensate for any change in volume of the damping fluid due to temperature changes, fluid loss, etc. A bottom mount 28 is secured to the lower end of the housing 12, and is adapted to secure the housing 12 to a chassis component such as a vehicle wheel end assembly (not shown) in a conventional manner.

The piston rod 20 extends through a conventional jounce bumper 32, which circumscribes the piston rod. The jounce bumper 32 is made of a resilient material, and absorbs the force of the housing 12 impacting upon the jounce bumper. These impact forces are due to especially large magnitude movements of the housing 12 which may be caused, for example, by movement of the vehicle upon which the shock absorber 10 is used over a particularly rough road at a relatively high speed.

The piston rod 20 includes a reduced diameter portion or tenon 33 that cooperates with the larger diameter portion of piston rod to define a shoulder upon which is disposed a washer 30. The tenon 33 extends through a top mount 34 that abuts and attaches to the body 36 of the vehicle. The top mount 34 includes a top mount housing 38 having a radially outwardly projecting, circumferentially extending flange 40, which joins the two halves of top mount housing sections 38A and 38B. A resilient force absorbing insert 42 engages the shoulder 31, and is disposed around the tenon 33 of piston rod 20. The piston rod 20 extends into the vehicle body 36 and is secured thereto by a conventional fastener.

The shock absorber 10 is provided with an airlift mechanism 58 including an inflatable air sleeve 46 and a pressure retainer 48. The relative positions of the housing 12 and piston assembly 16 may be changed by altering air pressure within the air sleeve 46 to thereby change the riding height of the vehicle. This may be desirable, for example, to compensate for particularly heavy loads. A resilient force absorbing member 56 is bonded around the top mount housing 38B and against the pressure retainer 48 to provide a seal and the flexibility required between those components. This resilient force absorbing member 56 also provides isolation from noise and impact harshness. Impact forces transferred through the jounce bumper 32 are also transferred through the resilient force absorbing member 56 through cooperating surfaces on the jounce bumper and the flexible force receiving member.

One end 60 of the air sleeve 46 circumscribes the upper end 22 of the housing 12 and is attached thereto by a conventional fastener to form a pressure retaining seal therebetween. The other end 62 of the air sleeve 46 circumscribes the pressure retainer 48 and is attached thereto by a conventional fastener to form a pressure retaining seal therebetween. Accordingly, the air sleeve 46, the pressure retainer 48, the upper end 22 of the housing 12, and the top mount 34 cooperate to define a pressure retaining cavity 64. Compressed air is introduced into, and released from, the cavity 64 through a conventional fitting (not shown).

In operation, the shock absorber 10 dampens relative movement between the body and chassis of the vehicle by metering the damping fluid within chamber 14 across the piston 18 to thereby dampen the relative movement between the piston rod 20 and housing 12, which are respectively connected to the body and chassis of the vehicle. The dampening forces applied to the piston assembly 16 by this normal operation of the shock absorber 10 are transmitted through the force absorbing member 42 of the top mount 34 and from there to the vehicle body. As discussed above, the relative positions of the housing 12 and piston assembly 16 may be adjusted to control the riding height of the vehicle by introducing compressed air into, or releasing compressed air from, the cavity 64. Accordingly, when compressed air is introduced into the cavity 64, airlift forces are applied at the bottom of the top mount 34 through the resilient force absorbing member 56.

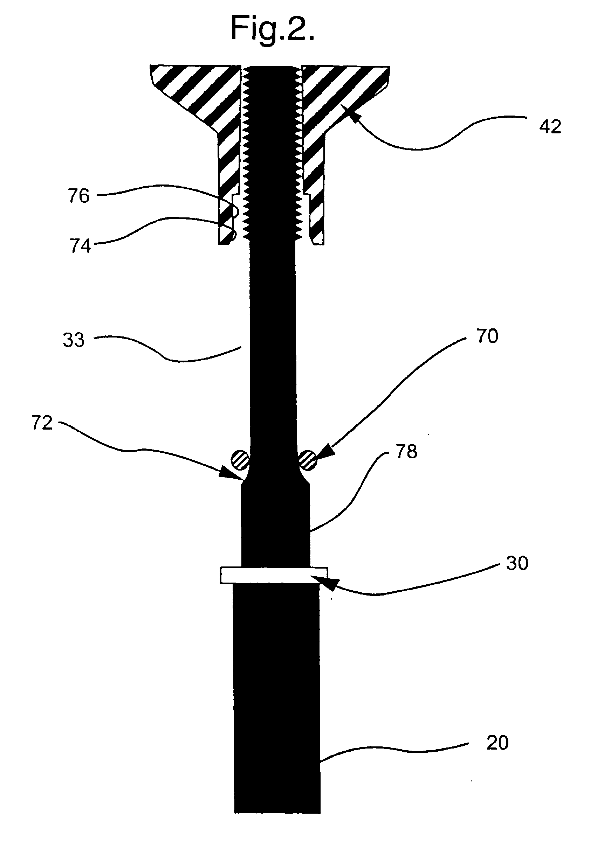

**FIG. 2** shows how the top mount insert 42 is sealed against the tenon 33 of the piston rod 20. An o-ring 70 is initially piloted over the threads of the tenon 33 to a position around a neck 72 of the tenon, and a chamfered end 74 leading into a cutout 76 in the top mount insert 42 is situated against the o-ring. When the insert 42 is thereafter lowered, either manually or automatically toward the shoulder 30, the o-ring 70 rolls down over the neck 72 and around a lower portion 78 of the tenon 33. As shown in **FIG. 1**, the o-ring 70 is preferably ultimately disposed all the way up in the cutout 76 of the mount insert 42. Relatively little force is required to roll the o-ring 70 into place, which reduces stress on the o-ring during assembly and reduces potential damage to the o-ring.

While the embodiment of the invention disclosed herein is presently considered to be preferred, various changes and modifications can be made without departing from the scope of the claims. For example, the process described above is equally applicable for installing multiple o-rings.

## Claims

1. A top mount for a damper having a piston rod tenon (33), the top mount comprising:
a mount insert (42) disposed on the tenon **characterized in that** the mount insert has a cutout (76); and
an o-ring (70) is disposed on the tenon and within the cutout of the mount insert.

2. The top mount of claim 1 further comprising a washer (30) disposed on the tenon, the mount insert engaging the washer.

3. The top mount of claim 1 wherein the mount insert has a chamfer (74) leading into the cutout.

4. The top mount of claim 1 wherein the tenon includes a lower portion (78) and a neck (72) connected to the lower portion.

5. The top mount of claim 4 wherein the neck has a diameter less than a diameter of the lower portion of the piston rod.

6. The top mount of claim 5 wherein the o-ring is disposed on the lower portion of the piston rod.

7. The top mount of claim 1 wherein the damper is an airlift damper.

8. A damper comprising:
a piston rod tenon (33);
a mount insert (42) disposed on the tenon, **characterized in that** the mount insert has a cutout (76); and
an o-ring (70) is disposed on the tenon and within the cutout of the mount insert.

9. The damper of claim 8 further comprising a washer (30) disposed on the tenon, the mount insert engaging the washer.

10. The damper of claim 8 wherein the mount insert has a chamfer (74) leading into the cutout.

11. The damper of claim 8 wherein the tenon includes a lower portion (78) and a neck (72) connected to the lower portion.

12. The damper of claim 11 wherein the neck has a diameter less than a diameter of the lower portion of the piston rod.

13. The damper of claim 12 wherein the o-ring is disposed on the lower portion of the piston rod.

14. The damper of claim 8 wherein the damper is an airlift damper.

15. A method of assembling a top mount on a piston rod tenon (33), the method comprising:
providing an o-ring (70) on the tenon;
providing a mount insert (42) on the tenon, the mount insert having a cutout (76); and
moving the mount insert relative to the tenon to situate the o-ring within the cutout of the mount insert.

16. The method of claim 15 further comprising providing a washer (30) on the tenon, and moving the mount insert into engagement with the washer.

17. The method of claim 15 wherein the mount insert has a chamfer (74) leading into the cutout.

18. The method of claim 15 wherein the tenon includes a lower portion (72) and a neck (78) connected to the lower portion.

19. The method of claim 18 wherein the neck has a diameter less than a diameter of the lower portion of the piston rod.

20. The method of claim 19 wherein the o-ring is disposed on the lower portion of the piston rod.

## Patentansprüche

1. Obere Halterung für einen Dämpfer mit einem Kolbenstangenzapfen (33), wobei die obere Halterung umfasst:
einen Halterungseinsatz (42), der an dem Zapfen angeordnet ist,
**dadurch gekennzeichnet, dass**
der Halterungseinsatz einen Ausschnitt (76) aufweist; und ein O-Ring (70) an dem Zapfen und in dem Ausschnitt des Halterungseinsatzes angeordnet ist.

2. Obere Halterung nach Anspruch 1,
die ferner eine Scheibe (30) umfasst, die an dem Zapfen angeordnet ist, wobei der Halterungseinsatz mit der Scheibe in Eingriff steht.

3. Obere Halterung nach Anspruch 1,
wobei der Halterungseinsatz eine Fase (74) aufweist, die in den Ausschnitt führt.

4. Obere Halterung nach Anspruch 1,
wobei der Zapfen einen unteren Abschnitt (78) und einen Hals (72) umfasst, der mit dem unteren Abschnitt verbunden ist.

5. Obere Halterung nach Anspruch 4,
wobei der Hals einen Durchmesser aufweist, der kleiner ist als der Durchmesser des unteren Abschnittes der Kolbenstange.

6. Obere Halterung nach Anspruch 5,
wobei der O-Ring an dem unteren Abschnitt der Kolbenstange angeordnet ist.

7. Obere Halterung nach Anspruch 1,
wobei der Dämpfer ein Lufthebedämpfer ist.

8. Dämpfer, umfassend:
einen Kolbenstangenzapfen (33);
einen Halterungseinsatz (42), der an dem Zapfen angeordnet ist,
**dadurch gekennzeichnet, dass**
der Halterungseinsatz einen Ausschnitt (76) aufweist; und
ein O-Ring (70) an dem Zapfen und in dem Ausschnitt des Halterungseinsatzes angeordnet ist.

9. Dämpfer nach Anspruch 8,
der ferner eine Scheibe (30) umfasst, die an dem Zapfen angeordnet ist, wobei der Halterungseinsatz mit der Scheibe in Eingriff steht.

10. Dämpfer nach Anspruch 8,
wobei der Halterungseinsatz eine Fase (74) aufweist, die in den Ausschnitt führt.

11. Dämpfer nach Anspruch 8,
wobei der Zapfen einen unteren Abschnitt (78) und einen Hals (72) umfasst, der mit dem unteren Abschnitt verbunden ist.

12. Dämpfer nach Anspruch 11,
wobei der Hals einen Durchmesser aufweist, der kleiner ist als der Durchmesser des unteren Abschnittes der Kolbenstange.

13. Dämpfer nach Anspruch 12,
wobei der O-Ring an dem unteren Abschnitt der Kolbenstange angeordnet ist.

14. Dämpfer nach Anspruch 8,
wobei der Dämpfer ein Lufthebedämpfer ist.

15. Verfahren zum Montieren einer oberen Halterung an einem Kolbenstangenzapfen (33), wobei das Verfahren umfasst, dass:
ein O-Ring (70) an dem Zapfen vorgesehen wird;
ein Halterungseinsatz (42) an dem Zapfen vorgesehen wird,
wobei der Halterungseinsatz einen Ausschnitt (76) aufweist; und
der Halterungseinsatz relativ zu dem Zapfen bewegt wird, um den O-Ring in dem Ausschnitt des Halterungseinsatzes anzuordnen.

16. Verfahren nach Anspruch 15,
das ferner umfasst, dass eine Scheibe (30) an dem Zapfen vorgesehen wird und der Halterungseinsatz in Eingriff mit der Scheibe bewegt wird.

17. Verfahren nach Anspruch 15,
wobei der Halterungseinsatz eine Fase (74) aufweist, die in den Ausschnitt führt.

18. Verfahren nach Anspruch 15,
wobei der Zapfen einen unteren Abschnitt (72) und einen Hals (78) aufweist, der mit dem unteren Abschnitt verbunden ist.

19. Verfahren nach Anspruch 18,
wobei der Hals einen Durchmesser aufweist, der kleiner ist als der Durchmesser des unteren Abschnittes der Kolbenstange.

20. Verfahren nach Anspruch 19,
wobei der O-Ring an dem unteren Abschnitt der Kolbenstange angeordnet ist.

## Revendications

1. Support supérieur destiné à un amortisseur, comportant un tenon (33) de tige de piston, le support supérieur comprenant :
une pièce d'insertion (42) de support, disposée sur le tenon, **caractérisé en ce que** la pièce d'insertion de support comporte une cavité (76) ;
et **en ce qu'**un joint torique (70) se place sur le tenon et à l'intérieur de la cavité de la pièce d'insertion de support.

2. Support supérieur selon la revendication 1, comprenant en outre une rondelle (30) disposée sur le tenon, la pièce d'insertion de support venant en contact avec la rondelle.

3. Support supérieur selon la revendication 1, dans lequel la pièce d'insertion de support comporte un chanfrein (74) conduisant à la cavité.

4. Support supérieur selon la revendication 1, dans lequel le tenon comprend une partie inférieure (78) et un collet (72) relié à cette partie inférieure.

5. Support supérieur selon la revendication 4, dans lequel le diamètre du collet est inférieur au diamètre de la partie inférieure de la tige de piston.

6. Support supérieur selon la revendication 5, dans lequel le joint torique est disposé sur la partie inférieure de la tige de piston.

7. Support supérieur selon la revendication 1, dans lequel l'amortisseur est un amortisseur avec régulation du niveau pneumatique.

8. Amortisseur comprenant :
un tenon (33) de tige de piston;
une pièce d'insertion (42) de support, disposée sur le tenon, **caractérisé en ce que** la pièce d'insertion de support comporte une cavité (76)
et **en ce qu'**un joint torique (70) est disposé sur le tenon et à l'intérieur de la cavité de la pièce d'insertion de support.

9. Amortisseur selon la revendication 8, comprenant en outre une rondelle (30) disposée sur le tenon, la pièce d'insertion de support venant en contact avec la rondelle.

10. Amortisseur selon la revendication 8, dans lequel la pièce d'insertion de support comporte un chanfrein (74) conduisant à la cavité.

11. Support supérieur selon la revendication 8, dans lequel le tenon comprend une partie inférieure (78) et un collet (72) relié à cette partie inférieure.

12. Support supérieur selon la revendication 11, dans lequel le diamètre du collet est inférieur au diamètre de la partie inférieure de la tige de piston.

13. Support supérieur selon la revendication 12, dans lequel le joint torique est disposé sur la partie inférieure de la tige de piston.

14. Support supérieur selon la revendication 8, dans lequel l'amortisseur est un amortisseur avec régulation du niveau pneumatique.

15. Procédé d'assemblage d'un support supérieur sur un tenon (33) de tige de piston, ce procédé comprenant :
l'apport d'un joint torique (70) sur le tenon;
l'apport d'une pièce d'insertion (42) de support sur le tenon, la pièce d'insertion de support comportant une cavité (76) ;
et le déplacement de la pièce d'insertion par rapport au tenon, afin de placer le joint torique à l'intérieur de la cavité de la pièce d'insertion de support.

16. Procédé selon la revendication 15, comprenant en outre une rondelle (30) sur le tenon, et le déplacement de la pièce d'insertion de support jusqu'au contact avec la rondelle.

17. Procédé selon la revendication 15, dans lequel la pièce d'insertion de support comporte un chanfrein (74) conduisant dans la cavité.

18. Procédé selon la revendication 15, dans lequel le tenon comprend une partie inférieure (78) et un collet (72) relié à cette partie inférieure.

19. Procédé selon la revendication 18, dans lequel le diamètre du collet est inférieur au diamètre de la partie inférieure de la tige de piston.

20. Procédé selon la revendication 19, dans lequel le joint torique est disposé sur la partie inférieure de la tige de piston.
